Europäisches Patentamt

European Patent Office

Office européen des brevets

(11) Publication number: **0 536 601 A1**

## EUROPEAN PATENT APPLICATION

(21) Application number: **92116347.3**

(22) Date of filing: **24.09.92**

(51) Int. Cl.5: **C08L 67/00**

(30) Priority: **07.10.91 NL 9101685**

(43) Date of publication of application:
**14.04.93 Bulletin 93/15**

(84) Designated Contracting States:
**DE ES FR GB IT NL**

(71) Applicant: **GENERAL ELECTRIC COMPANY**
**1 River Road**
**Schenectady, NY 12345(US)**

(72) Inventor: **Tabankia, Farshid**
**General Electric Plastics B.V., P.O. Box 117**
**NL-4600 AC Bergen op Zoom(NL)**
Inventor: **De Boer, Johannes Joachim**
**General Electric Plastics B.V., P.O. Box 117**
**NL-4600 AC Bergen op Zoom(NL)**

(74) Representative: **Pratt, Richard Wilson et al**
**London Patent Operation G.E. Technical**
**Services Co. Inc. Essex House 12/13 Essex**
**Street**
**London WC2R 3AA (GB)**

(54) **Polymer mixture comprising a polyester and copolyether ester block copolymer, articles formed therefrom.**

(57) The invention relates to a polymer mixture which comprises A) a polyester and B) a copolyether ester block copolymer consisting of the reaction product of (a) at least one diol with 2-8 carbon atoms; (b) at least one dicarboxylic acid and (c) at least one ethylene oxide capped poly-(propylene oxide) glycol having an ethylene oxide content of 15-35% by weight and a number-averaged molecular weight of 1,500-3,000. Articles formed from the polymer mixture according to the invention have a reduced surface resistance. Addition of a flame-retardant leads to a further reduction of the surface resistance.

The invention relates to a polymer mixture which comprises

A) a polyester and

B) a copolyether ester block copolymer consisting of the reaction product of (a) at least one diol with 2-8 carbon atoms; (b) at least one dicarboxylic acid and (c) at least one ethylene oxide capped poly-(propylene oxide) glycol having an ethylene oxide content of 15-35% by weight and a number-averaged molecular weight of 1,500-3,000.

The invention also relates to articles formed from the polymer mixtures according to the invention.

US-A-4,639,486 discloses polymer mixtures based on a polyether imide ester and a halogen-containing flame-retardant. The polymer mixtures described may comprise a polyester, for example, polybutylene terephthalate. In the examples polyether imide esters are used which have been obtained from butanediol, dimethyl terephthalate, poly(propylene ether) diamine and trimellitic acid anhydride. Various flame-retardants are used in the examples. According to the general teaching of US-A-4,639,486 a great number of different diamines, including diamines derived from "ethylene oxide end-capped poly(propylene ether)-glycol", may be used instead of the poly(propylene ether) diamine in preparing the polyether imide ester. However, according to US-A-4,639,486 other diamines, for example, those derived from poly(propylene ether) glycol, are preferred. According to US-A-4,639,486 a large number of different agents may be used as a flame-retardant.

EP-A-0 443 457 describes thermoplastic molding compositions comprising an admixture of a thermoplastic polyester and a thermoplastic copolyether ester elastomer. The thermoplastic polyester can be a poly(butylene terephthalate). The thermoplastic copolyether ester elastomer as used in the composition according to EP-A-0 443 457 comprises the reaction product of (a) at least one low molecular weight diol; (b) at least one dicarboxylic acid; (c) at least one poly(alkylene oxide) glycol consisting predominantly of alkylene oxide units having a carbon-to-oxygen ratio of greater than 2.0 and (d) polyethylene glycol. According to EP-A-0 443 457 the presence of the polyethylene glycol blocks (d) is essential to obtain the desired paintability. According to the general teaching of EP-A-0 443 457 especially preferred poly(alkylene ether) glycols are poly(propylene ether) glycol and poly (tetramethylene ether) glycol and poly(propylene glycol) capped with poly (1,2 ethylene ether) glycol. In all examples poly(tetramethylene ether) glycol is used as poly(alkylene ether) glycol.

It has been found that the use of a copolyether ester block copolymer consisting of the reaction product of (a) at least one diol with 2-8 carbon atoms; (b) at least one dicarboxylic acid and (c) at least one ethylene oxide capped poly-(propylene oxide) glycol having an ethylene oxide content of 15-35% by weight and a number-averaged molecular weight of 1,500-3,000 leads to polymer mixtures having a lower surface resistance and hence a smaller electrostatic charge and a reduced dust attraction of the surface of articles formed from the polymer mixture according to the invention. It has been found in addition that delamination does not occur when such polyether ester block copolymers are used; nor does it occur when a specially selected flame-retardant is added thereto.

The polymer mixture according to the invention preferably comprises 10-90% by weight, more preferably 10-50% by weight, of the block copolymer B, calculated with respect to the total quantity of the constituents A and B together.

The polymer mixture according to the invention may moreover comprise further conventionally used additives, for example, flame-retardants. One type of flame-retardants, namely alkylene-bis-bromophthalimide, has been found to further reduce the surface resistance and, of course, also provides flame-retardant properties and does not lead to delamination.

Therefore, the polymer mixture according to the invention may comprise in addition a flame-retardant, preferably an alkylene-bis-bromophthalimide.

The polymer mixture according to the invention comprises at any rate:

A) a polyester and

B) a polyether ester block copolymer as further defined hereinafter.

A) Polyester

The invention relates to polymer mixtures which comprise a polyester having units derived from an alkanediol and an aromatic dicarboxylic acid. The polyester may comprise units derived from one or more alkanediol compounds. The polyester may also comprise units derived from one or more aromatic dicarboxylic acids. In addition to the alkanediol the polyester may comprise units derived from one or more other diol compounds or polyol compounds.

In general the polyester comprises an excess of units derived from an alkanediol with respect to the optionally present units derived from other diol compounds or polyol compounds. Examples of suitable

2

alkanediol compounds are ethanediol or butane-1,4-diol. The polyester may also comprise units derived from other dicarboxylic acids or polycarboxylic acids in addition to units derived from aromatic dicarboxylic acids. The greater part of the units derived from acids, however, is preferably derived from an aromatic dicarboxylic acid. Suitable aromatic dicarboxylic acids are terephthalic acid and isophthalic acid.

A polyester having more than 70 mol% of units derived from terephthalic acid and butane-1,4-diol is preferably used as a polyester. It is also possible to use one or more different polyesters.

B) Polyether ester block copolymer

The polymer mixture according to the invention comprises a copolyether ester block copolymer consisting of the reaction product of (a) at least one diol with 2-8 carbon atoms; (b) at least one dicarboxylic acid and (c) at least one ethylene oxide capped poly-(propylene oxide) glycol having an ethylene oxide content of 15-35% by weight and a number-averaged molecular weight of 1,500-3,000.

Suitable diols are ethane diol, butane diols and hexane diols. Suitable dicarboxylic acids are for example aromatic dicarboxylic acids such as terephthalic acid.

Such block copolymers are known per se. Suitable block copolymers and their methods of preparation are disclosed, for example, in EP-A-0 203 634 and US-A-4,205,158. The block copolymers as described in EP-A-0 203 634 are to be preferred.

As already mentioned hereinbefore, the polymer mixture according to the invention may comprise a flame-retardant, for example, an alkylene-bis bromophthalimide. A particularly suitable flame-retardant is (ethylene-bis-tetrabromophthalimide). The flame-retardant is preferably used in a quantity of approximately 10-30 parts by weight per 100 parts by weight of A plus B together. Delamination does not occur when alkylene-bis-bromophthalimides are used.

The invention will now be described in greater detail with reference to the ensuing specific examples.

Examples A to C; I and II

The following constituents were used in the examples:

PBT: a polyester derived from butanediol and terephthalic acid having an intrinsic viscosity of 1.2 dl/g determined in a mixture of 60 parts of phenol and 40 parts of tetrachloroethane, at 25°C.

BC-1: a block copolymer suitable for use in the polymer mixture according to the invention. The block copolymer comprises a polyether block derived from a poly(propylene oxide)glycol capped with ethylene oxide; the ethylene oxide glycol content is approximately 20% by weight. The block copolymer further comprises units derived from butanediol and terephthalic acid. The content of polyether block is approximately 41% by weight. The melt flow rate according to ISO 1133 determined at 230°C/2.16 kg is 6 grammes per 10 minutes.

BC-2: a polyether ester block copolymer obtained from butanediol, dimethyl terephthalate, poly(propylene oxide glycol)diamine (having a number-averaged molecular weight of 2,000) and trimellitic acid anhydride. The weight ratio dimethyl terephthalate to the sum of the diamine plus the acid anhydride is 50 : 50. This is a block copolymer as used in the examples of US-A-4,639,486.

FR: (ethylene-bis-tetrabromophthalimide)

Sb2O3: a mixture of approximately 85% by weight of Sb2O3 and 15% by weight of a polymeric carrier.

Stab: a mixture of conventionally used stabilisers

PTFE: polytetrafluoroethylene (40% by weight) mixed with a polymeric carrier (60% by weight).

The constituents mentioned hereinbefore were compounded in an extruder in the quantities as indicated in the table hereinafter. The average compounding temperature was 260°C. The resulting extrudate was pelleted. Test plates having a diameter of 10 cm were manufactured from the pellets by injection moulding in a suitable mould. The surface resistance of the test plates was determined according to the German standard DIN 50,014. The surface resistance was determined two times: right after injection moulding and after storing the test plates under fixed conditions (relative humidity 50% at room temperature for 18 hours). The average of the two values is indicated in the table hereinafter.

The standard mechanical properties and the flame-retardant properties according to UL-94 were moreover determined of the composition according to example II. All the mechanical properties were excellent; the UL-94 rating of a 1.6 millimetres thick test rod was V-O. The tracking resistance of the polymer mixture according to example II was also determined (according to IEC-112): it was more than 600 volts. The polymer mixtures according to the invention showed no delamination. Polymer mixtures with BC-2 and another flame-retardant (namely brominated polystyrene) on the contrary, did.

The values obtained for the surface resistance are recorded in the table hereinafter together with the composition of the polymer mixtures.

T A B L E

| Example | A | B | C | I | II |
| --- | --- | --- | --- | --- | --- |
| Composition | | | | | |
| (parts by weight) | | | | | |
| o PBT | 100 | 74.7 | 51.7 | 74.7 | 51.7 |
| o BC-1 | -- | -- | -- | 25 | 25 |
| o BC-2 | -- | 25 | 25 | -- | -- |
| o FR | -- | -- | 15 | -- | 15 |
| o Sb2O3 | -- | -- | 7 | -- | 7 |
| o Stab | -- | 0.35 | 0.35 | 0.35 | 0.35 |
| o PTFE | -- | -- | 1 | -- | 1 |
| Properties | | | | | |
| o surface resistance* above (Ohms per square) | 14 | 13 | 13 | 11 | 9 |

* shown is the exponent with numerical base 10.

It may be seen from the results in the table that articles formed from the polymer mixtures according to the invention, i.e. the examples I and II, have a lower surface resistance than articles formed from the comparative polymer mixtures according to the examples A, B and C.

Addition of a flame-retardant (FR) in itself does not provide a reduction of the surface resistance (comparative example C compared with comparative example B). In combination with a copolyether ester block copolymer as used in the polymer mixture according to the invention, the addition of the flame-retardant provides a further reduction of the surface resistance (example II v. example I).

All the patent publications mentioned hereinbefore are considered to be incorporated in the present specification by reference.

## Claims

1. A polymer mixture which comprises
   A) a polyester and
   B) a copolyether ester block copolymer consisting of the reaction product of (a) at least one diol with 2-8 carbon atoms; (b) at least one dicarboxylic acid and (c) at least one ethylene oxide capped poly-(propylene oxide) glycol having an ethylene oxide content of 15-35% by weight and a number-averaged molecular weight of 1,500-3,000.

2. A polymer mixture as claimed in Claim 1, characterised in that it comprises 10-90% by weight of the block copolymer B calculated with respect to the total quantity of the constituents A and B together.

3.  A polymer mixture as claimed in Claim 1, characterised in that the polyester comprises units derived from an alkanediol and an aromatic dicarboxylic acid.

4.  A polymer mixture as claimed in Claim 1, characterised in that it comprises in addition a flame-retardant.

5.  A polymer mixture as claimed in Claim 4, characterised in that it comprises an alkylene-bis-bromophthalimide as a flame-retardant.

6.  Articles formed from the polymer mixture as claimed in Claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0 443 457 (GENERAL ELECTRIC COMPANY) * page 4, line 54 - page 5, line 7; claims 1,5-15,39-42 * --- | 1-3 | C08L67/00 |
| A | EP-A-0 365 129 (E.I. DU PONT DE NEMOURS AND COMPANY) * claims 1,4 * --- | 1-6 | |
| A | NL-A-7 002 223 (TORAY INDUSTRIES) * page 1, line 1 - line 7; claims 1-9 * --- | 1-3 | |
| A | US-A-4 165 303 (SCHLOSSMAN ET AL) * claims 1-5 * --- | 1-3 | |
| D,A | EP-A-0 203 634 (AKZO N.V.) * claims 1-8 * ----- | 1 | |
| | | | TECHNICAL FIELDS SEARCHED (Int. Cl.5 ) |
| | | | C08L |

The present search report has been drawn up for all claims

| Place of search | Date of completion of the search | Examiner |
|---|---|---|
| THE HAGUE | 27 NOVEMBER 1992 | DECOCKER L. |

EPO FORM 1503 03.82 (P0401)